(19) Europäisches Patentamt
European Patent Office
Office européen des brevets

(11) **EP 2 463 192 B1**

(12) **EUROPEAN PATENT SPECIFICATION**

(45) Date of publication and mention of the grant of the patent:
**23.10.2013 Bulletin 2013/43**

(51) Int Cl.:
**B63B 1/08** (2006.01)

(21) Application number: **11193019.4**

(22) Date of filing: **12.12.2011**

(54) **Hull design for riverboats and riverboats comprising such a hull**

Rumpfentwurf für Flussschiff und Flussschiffe mit derartigem Rumpf

Design de coque pour barges et barges comportant une telle coque

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2010 EP 10015507**

(43) Date of publication of application:
**13.06.2012 Bulletin 2012/24**

(73) Proprietor: **H2O Ships B.V.**
**2909 PA Capelle a/d Ijssel (NL)**

(72) Inventors:
• **Speksnijder, Teunis**
  **2909 PA Capelle a/d IJssel (NL)**
• **Hut, Pieter**
  **5301 BM Zaltbommel (NL)**

(74) Representative: **Renkema, Jaap**
**IPecunia Patents B.V.**
**P.O. Box 593**
**6160 AN Geleen (NL)**

(56) References cited:
**US-A- 3 991 696**      **US-A1- 2009 320 731**
**US-A1- 2010 000 455**

• **SCHMIDT W: "SPEZIELLE SCHIFFBAULICHE STRUKTUREN AM BEISPIEL DES FAST MONOHULL", SCHIFF UND HAFEN, SEEHAFEN VERLAG GMBH, DE, vol. 52, no. 10, 1 October 2000 (2000-10-01), pages 135,137-140, XP001017664, ISSN: 1436-8498**

## Description

The present invention relates to a hull design for a riverboat or vessels for inland shipping.

In the context of the present invention a riverboat is defined as being a ship designed for inland shipping and navigation. Such ships are usually less sturdy than ships built for the open seas. They are limited in size by width and depth of the river as well as the height of bridges spanning the river.

Riverboats are known in the art. Hull designs of conventional riverboats are based on maximizing the amount of cargo that can be transported with a vessel of a certain size. Until recently, optimal hydrodynamic design of riverboats was of lesser concern.

Document US 2009/320731 constitutes the closest prior art.

In Europe, inland shipping is divided into CEMT classes in order to harmonise waterway dimensions in Western-Europe. The term 'CEMT-class' refers to the Conférence Européene des Ministres de Transport (i.e. European Conference of Ministers of Transport). The CEMT established the classes. According to the system, each class has maximum sizes for vessels and push-tug combinations. The classification helps determine where particular vessels are allowed to travel based on for example bridge heights and lock sizes (i.e. structural works), draught (i.e. the depth below the water line to the bottom of a vessel's hull), waterway width and the condition of the waterway shores and/or quay-sides.

According to the CEMT classification, access to inland waterways may be limited to riverboats having a certain size. An important factor for determining the maximum allowable ship size in an inland waterway is the phenomenon called wave-making.

When a riverboat moves through water, waves are generated, which waves eventually reach the river shore or quay-side. Larger ships create larger waves. When the waves reach the river shore or quay-side, the wave may cause damage to the river shore or quay-side. This is a reason for limiting the maximum ship size for a certain waterway.

Conventional riverboats have a disadvantage that they create relatively large waves, so that the maximum allowable ship size is not determined by structural works, draught and waterway width, but to a large extent by the condition of the waterway shores and/or quay-sides. In other words, larger ships could be allowed in such waterways if the wave-making phenomenon would be reduced or if the river banks are reinforced. The latter is of course a rather complex and expensive solution.

It is therefore an objective of the present invention to provide a riverboat or vessel for inland shipping that overcomes or at least mitigates the above stated disadvantage.

This object is achieved by a riverboat according to claim 1.

The hull form is constructed so that there are variations in the distribution of the immersed cross- sectional area of the hull that affect wave making resistance. The specific distribution of immersed cross-sectional area minimizes bow wave making (i.e. at the front end) and optimizes the closing wake. The bow wave impedes forward motion of a hull form. The stem closing wake pushes the hull forward and enhances the forward motion. The stem sections (i.e. the tail-end) are designed to be of such a configuration that as the water which is spread by the bow, now must close in around the stem of the hull, the wave height is decreased. Curving the tail end in towards the hull centerline increases the advantage of the closing thrust created by the stem wake.

A riverboat comprising a hull according to the present invention indeed shows reduced wave-making. Larger ships may therefore be allowed on inland waterways.

It is a further advantage of the riverboat comprising the hull design according to the present invention, that the riverboat consumes considerable less energy, resulting in lower fuel consumption per ton of cargo.

The riverboat according to the invention comprises a hull comprising a front end 10, a mid-section 20 and a tail end 30. The hull comprises a bottom part 1, a first cavity 2A, a second cavity 2B, a first protrusion 3A and a second protrusion 3B. The bottom part 1 extends from the front end 10 via the mid-section 20 to the tail end 30. The lower and upper boundaries of the range within which the width of the bottom part 1 of the tail end 30 lies, are described as a function of z by formula I:

$$W_{bottom}(z) = [W_{mid} / (1 + \exp(-c^*(z - z_{1/2w}))] + A \qquad \text{formula I}$$

wherein:

- $W_{bottom}(Z)$ is the width of the bottom part 1 as a function of a length coordinate z, z ranging from 0 at the ultimate end of the tail end to $z_{Wmid}$ where $W_{bottom}(z) = W_{mid}$;
- $W_{mid}$ is the width of the mid-section of the hull;
- c is a parameter ranging from 0.4 - 0.8;
- $Z_{1/2W}$ is the length coordinate where the width of the bottom part 1 of the tail end 30 is halve the width of the bottom part 1 at the mid-section 20 ($W_{mid}$);

- A is a constant ranging from- 0.5 m to + 0.5 m, wherein- 0.5 m defines the lower boundary of $W_{bottom}$ (z) and wherein + 0.5 m defines the upper boundary of $W_{bottom}$ (Z) .

Preferably the width of the bottom part 1 of the tail end 30 is 0 at a position between $z = z_{1/2W} - 20$ and $z = z_{1/2W} - 5$.

Preferably, parameter c ranges between 0.42 and 0.7, more preferably between 0.45 and 0.55.

Preferably A ranges between -0.4 m and +0.4 m, more preferably between -0.3 m and + 0.3 m and most preferably between -0.2 m and 0.2 m.

Preferably the width of the bottom part 1 of the tail end as a function of z describes an S-curve.

The vertical position of the bottom ($y_{bottom}$) defines a baseline, wherein y = 0.

The first cavity 2A has a maximum distance from the baseline at horizontal position $x_{2a}$ as a function of the length coordinate z.

The vertical position of the first cavity as a function of the length coordinate z ($y_{2a}(z)$) starts at substantially halve the height of the hull at z=0 and gradually decreases to substantially a third of the height of the hull at $z>z_{1/2W}$, after which $y_{2a}$ remains constant;

The first protrusion 3A has a horizontal position $x_{3a}$ as a function of the length coordinate z, $x_{3a}$ starting at substantially 1/6th of $W_{mid}$ at a z-coordinate substantially equal to 1/10th of the length of the tail-end and gradually increasing to ½$W_{mid}$ at $z>z_{1/2W}$. The vertical position of the first protrusion 3A, $y_{3a}$, substantially starts at 1/4th of the height of the hull at a z-coordinate substantially equal to 1/10th of the length of the tail-end and remains substantially constant along the length of the tail end.

The second cavity 2B and the second protrusion 3B are mirror images of the first cavity 2A and the first protrusion 3A, with respect to the hull's centerline (60) respectively.

The hull has a length of between 30 m and 150 m, preferably between 50 and 110, more preferably between 60 and 90, wherein a length of 38.50 m corresponds to CEMT class I, a length of between 50 m and 55 m corresponds to CEMT class II, a length of between 67 m and 80 m corresponds to CEMT class III, a length of 80 m - 85 m corresponds to CEMT class IV and a length of between 95 m - 110 m corresponds to CEMT class Va (CEMT classes Vb - VIIb relate to push-tug combinations which are not relevant for the present invention).

When designing a hull for a riverboat, the length is normally optimized, such that the ship can accommodate a fixed number of standard containers. The length of a standard container is approximately 12 m. Therefore if the length of a certain hull design is scaled up, the length would be increased with 12 m, for example from 86 m to 98 m.

In an embodiment, the hull has a mid-section width ($W_{mid}$) of between 4 m and 12 m, preferably between 6 m and 11.5 m, more preferably between 8 m and 10 m, wherein a width of 5.05 m corresponds to CEMT class I, a width of 6.6 m corresponds to CEMT class II, a width of 8.2 m corresponds to CEMT class III, a width of 9.5 m corresponds to CEMT class IV and a width of 11.4 m corresponds to CEMT class Va.

In an embodiment, the relative length of the tail end of the hull with respect to the total length of the hull ($L_{tail\ end}$/$L_{hull}$) is between 0.1 and 0.5, preferably between 0.15 and 0.45, more preferably between 0.25 and 0.35.

In an embodiment, the riverboat has a draught of between 1.5 m and 6 m, preferably between 2.3 m and 5 m, more preferably between 2.5 m and 4.5 m, wherein

a draught of between 1.8 m and 2.2 m corresponds to CEMT class I, a draught of 2.5 m corresponds to CEMT classes II, III and IV and a draught of between 2.5 m and 4.5 m corresponds to CEMT class Va.

In an embodiment, the riverboat has a cargo capacity of between 200 tons and 3500 tons, preferably between 400 tons and 3200 tons, more preferably between 600 tons and 3000 tons, wherein a cargo capacity of between 250 tons and 400 tons corresponds to CEMT class I, a cargo capacity of between 400 tons and 650 tons corresponds to CEMT class II, a cargo capacity of between 650 tons and 1000 tons corresponds to CEMT class III, a cargo capacity of between 1000 tons and 1500 tons corresponds to CEMT class IV and cargo capacity of between 1500 tons and 3000 tons corresponds to CEMT class Va.

Detailed description

The invention will now be explained in detail with reference to the following figures

FIG 1. shows a schematic representation of the side view of a ship comprising a hull according to the present invention.

FIG 2. schematically shows a cross-section (in a direction indicated with arrows A in FIG. 1) of the tail end of a hull according to the present invention at frame 16

FIG 3. schematically shows projections of equidistant cross-sections (in a direction indicated with arrows A in FIG. 1) of the tail end of a hull according to the present invention.

FIG 4. Schematically shows projections of equidistant cross-section (in a direction indicated with arrows B in FIG. 1) of the tail end of a hull according to the present invention.

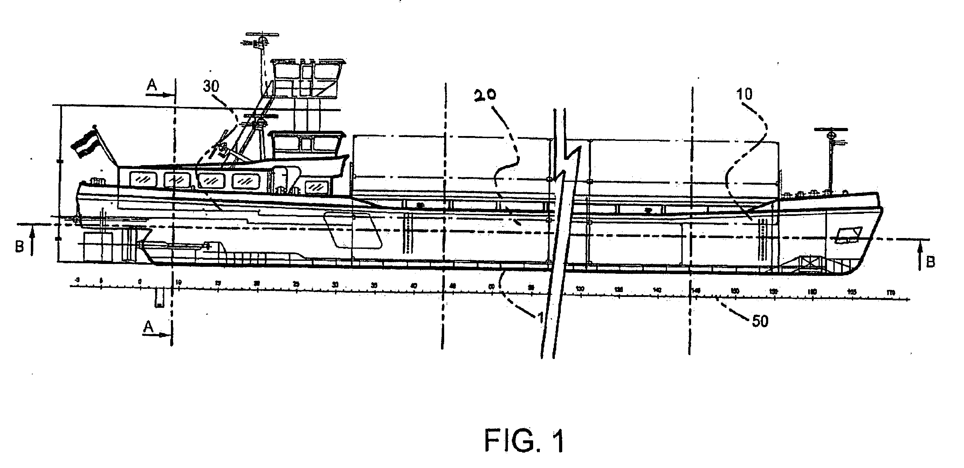

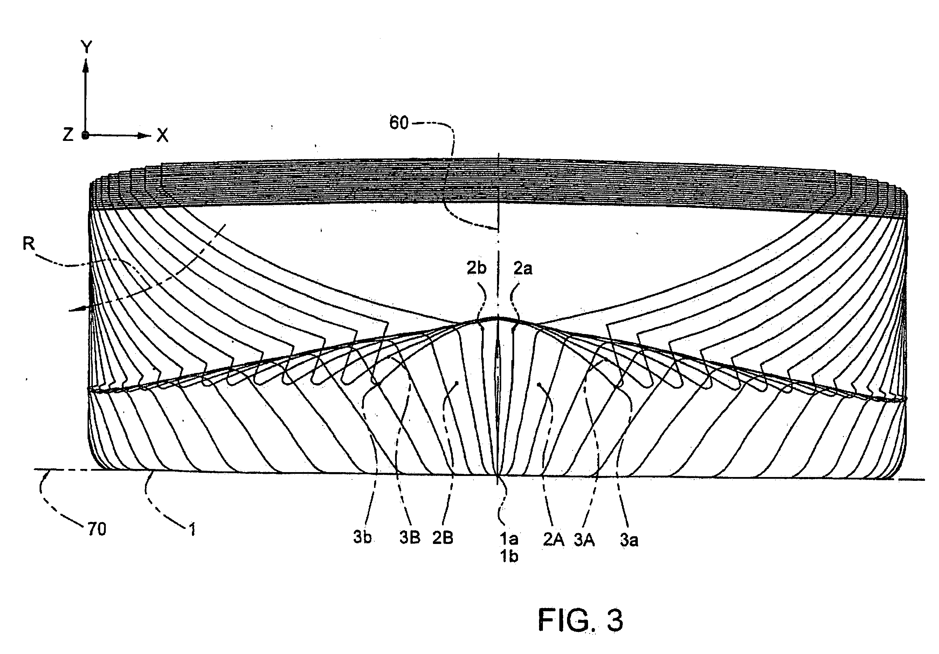

FIG 1. Shows a schematic representation of the side view of a ship comprising a hull according to the present invention. In FIG 1. a scale 50 is incorporated, running from 0 to 170. The scale is used as a reference for the equidistant cross-sections. The cross-section number in FIG 3. (also termed frame number) corresponds to the position on the scale. Scale 50 extends in the z-direction of the hull and depending on the actual length of the ship corresponds to an actual z-coordinate (which has the dimension meters).

In an example the hull according to the present invention is about 86 m long, indicating that the distance between two frames is 0.5 m.

In FIG. 1 it can also be seen that the front end 10, also termed foreship, approximately starts at frame 145 and ends at frame 168. The tail end 30, also termed aftership, approximately starts at frame -3 and ends approximately at frame 44. The mid-section 20 of the ship, also termed midship, therefore approximately starts at frame 44 and ends at frame 145.

In an example, the riverboat which is schematically shown in FIG 1 has a length of 86 m, width of 11.45 m (i.e. $W_{mid}$), a draught of 2.8 m and a cargo capacity of 1850 tons.

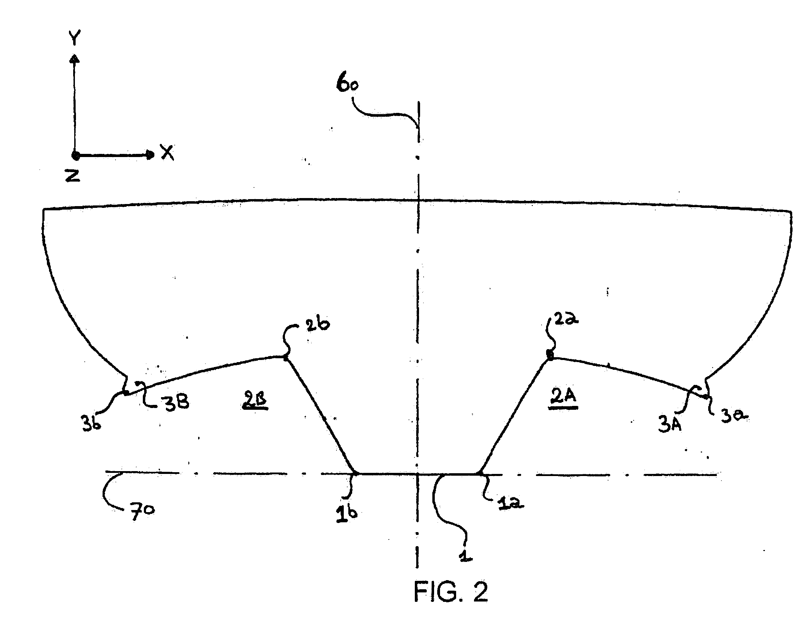

FIG. 2 shows a cross-section (in a direction indicated with arrows A in FIG. 1) of the tail end of a hull according to the present invention at frame 16. FIG. 2 shows that cavity 2A at a certain z-coordinate is defined by the area enclosed by points 1 a, 2a and 3a. Point 1 a being the right hand side edge of the bottom part 1; point 2a being the cavities highest point with respect to the baseline 70; and point 3a outermost point defining the protrusion 3A. The same holds for cavity 2B, which is the mirror image of cavity 2A with respect to centerline 60.

FIG. 3 shows projections of equidistant cross-sections (in a direction indicated with arrows A in FIG. 1) of the tail end of a hull according to the present invention. Arrow R in FIG. 3 indicates the order of the projected frames, starting with frame 0, further showing each second frame (0, 2, 4, etc) until frame 44.

FIG. 3 also shows that the first cavity 2A is defined by the trajectories in the z-direction (i.e. length of the hull) of three points: 1 a, 2a and 3a. The same holds for the second cavity 2B (1b, 2b and 3b, respectively). The trajectories of points 1 a and 1b; 2a and 2b; and 3a and 3b, respectively are each other's mirror image with respect to the centerline 60 of the hull.

Points 1 a and 1 b both start at the centerline 60 of the hull (x=0) and on the base line 70 (y=0) at frame number 8 (z- direction) . Points 1a and 1b define the outer points of the bottom part 1 of the hull. Therefore the y- coordinate of the trajectories of points 1 a and 1 b in the z- direction is 0 for all z- values. A centerline of the hull divides the hull into two equal parts, e.g. such that the x- coordinate of point 1 b is equal to the x- coordinate of point 1 a, but has the opposite sign ($x_{1b}$ =- $x_{1a}$) . The width of the bottom $W_{bottom}$ is equal to $x_{1a}$- $x_{1b}$, which is equal to $2x_{1a}$. The width as a function of the z- coordinate is given by formula I.

Points 2a and 2b both start at the centerline 60 of the hull (x=0) at a height of approximately half of the ships' height, $h_{ship}$, from the base line 70 at frame number 0 (i.e. $y_{frame\ 0}$ =0.5*$h_{ship}$). The x-coordinate of point 2a as a function of the z-coordinate is given by formula II. Due to the symmetry of the hull, the x-coordinate of point 2b has the opposite sign of the x-coordinate of point 2a, for all values of z (i.e. $x_{2b}$=-$x_{2a}$). The y-coordinate of both points 2a and 2b decreases to approximately 1/3rd of the height of the hull approximately at frame number 32 and remains constant from thereon. The trajectories of points 2a and 2b define the highest points of cavities 2A and 2B with respect to the base line 70.

Points 3a and 3b have horizontal positions $x_{3a}$ and $x_{3b}$ (due to symmetry, $x_{3b}$=- $x_{3a}$). $x_{3a}$ is a function of the length coordinate z, and starts at substantially 1/6th of the width of the mid-section of the hull (1/6*$W_{mid}$) at a z-coordinate substantially equal to 1/10th of the length of the tail-end. $x_{3a}$ gradually increases to halve the width of the mid-section of the hull (½*$W_{mid}$) at approximately frame number 32. The vertical position of the point 3a, $y_{3a}$, substantially starts at 1/4th of the height of the hull at a z-coordinate substantially equal to 1/10th of the length of the tail-end and remains substantially constant along the length of the tail end.

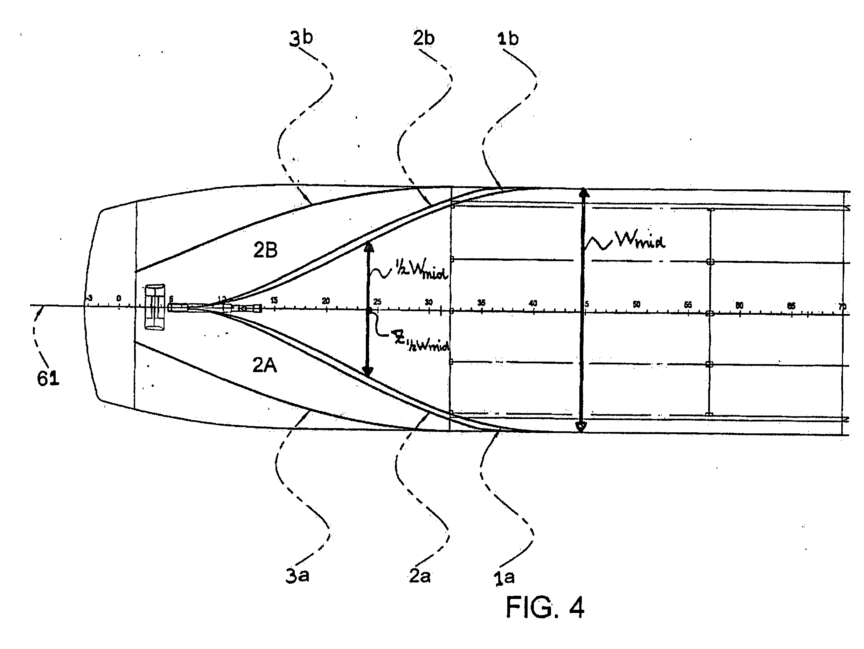

FIG. 4 shows that the first and the second cavity (2A and 2B) are connected at a low z value (below frame number 4) and together with FIG 3. it can be seen that the cavities have a convex shape. The trajectories of points 1 a, 1 b, 2a, 2b, 3a and 3b are shown in FIG 4. At low values of z (i.e. low frame numbers), the highest points of the cavities coincide with centerline 61. As z increases the highest points of the cavities move from the bottom 1, towards the protrusions 3A and 3B, respectively.

When a vessel having a hull according to the present invention moves through water, a wave is generated at the front-end side of the riverboat. The wave is generated due the fact that the vessel acts as an archimedian body, which means that in order to move the boat, water has to be 'pushed' aside at the bow, the so called bow wave. Depending on the speed of the boat, a certain amount of energy is used to generate the waves. A riverboat having a hull according to the present invention, also a closing wake is generated which interferes with the bow wave such that the amplitude of the wave that reaches the river banks has been reduced drastically.

**Claims**

1. A riverboat having a hull, wherein the hull comprises a front end (10), mid-section (20), tail end (30), a bottom part (1), a first protrusion (3A) and a second protrusion (3B) wherein the tail-end comprises a first cavity (2A) and a second cavity (2B), wherein the bottom part (1) has a width W as a function of the length coordinate of the hull (z), **characterized in that** the lower and upper boundaries of the range within which the width of the bottom part (1) of the tail end (30) lies, are described as a function of z by formula I:

$$W_{bottom}(z) = [W_{mid} / (1+ \exp(-c^*(z-z_{1/2W}))] + A \qquad \text{formula I}$$

wherein:

- $W_{bottom}(z)$ is the width of the bottom part 1 as a function of a length coordinate z, z ranging from 0 at the ultimate end of the tail end to $z_{Wmid}$ where $W_{bottom}(z) = W_{mid}$;
- $W_{mid}$ is the width of the mid-section of the hull;
- c is a parameter ranging from 0.4 - 0.8;
- $z_{1/2W}$ is the length coordinate where the width of the bottom part (1) of the tail end (30) is halve the width of the bottom part 1 at the mid-section 20 ($W_{mid}$);
- A is a constant ranging from- 0.5 m to + 0.5 m, wherein- 0.5 m defines the lower boundary of $W_{bottom}(z)$ and wherein + 0.5 m defines the upper boundary of $W_{bottom}(z)$ ; and

wherein the vertical position of the bottom ($y_{bottom}$) defines a baseline, wherein y = 0.

2. The riverboat according to claim 1, wherein the width of the bottom part 1 of the tail end 30 is 0 at a position between $z = z_{1/2W}$ - 20 and $z = z_{1/2W}$ - 5.

3. The riverboat according to any one of claims 1 and 2, wherein parameter c ranges between 0.42 and 0.7.

4. The riverboat according to any one of claims 1 to 3, wherein A ranges between -0.3 m and +0.3 m.

5. The riverboat according to any one of the previous claims, wherein the vertical position of the first cavity as a function of the length coordinate z ($y_{2a}(z)$) starts at substantially halve the height of the hull at z=0 and gradually decreases to substantially a third of the height of the hull at $z>z_{1/2W}$, after which $y_{2a}$ remains constant.

6. The riverboat according to any one of the previous claims, wherein the hull has a length of between 30 m and 150 m.

7. The riverboat according to anyone of the previous claims, wherein the hull has a length of between 60 an 90 m.

8. The riverboat according to any one of the previous claims, wherein the hull has a mid-section width ($W_{mid}$) of between 4 m and 12 m.

9. The riverboat according to any one of the previous claims, wherein the relative length of the tail end of the hull with respect to the total length of the hull ($L_{tail\ end}/L_{hull}$) is between 0.1 and 0.5.

10. The riverboat according to anyone of the previous claims, having a draught of between 2.5 m and 4.5 m.

11. The riverboat according to any one of the previous claims, having a cargo capacity of between 200 tons and 3500 tons.

**Patentansprüche**

1. Binnenschiff, das einen Rumpf aufweist, wobei der Rumpf ein vorderes Ende (10), einen Mittelabschnitt (20), ein hintere Ende (30), einen Kielteil (1), einen ersten Vorsprung (3A) und einen zweiten Vorsprung (3B) umfasst, wobei das hintere Ende einen ersten Hohlraum (2A) und einen zweiten Hohlraum (2B) umfasst, wobei der Kielteil (1) eine Breite W als Funktion der Längenkoordinate des Rumpfes (z) aufweist, **dadurch gekennzeichnet, dass** die unteren und oberen Grenzen des Bereiches, innerhalb dessen die Breite des Kielteiles (1) des hinteren Endes (30) liegt, durch Formel I als Funktion von z beschrieben ist:

$$W_{bottom}(z) = [W_{mid}/(1+\exp(-c*(z-z_{1/2W})))]+A \qquad \text{Formel 1}$$

wobei:

- $W_{bottom}(z)$ die Breite des Kielteiles (1) als Funktion einer Längenkoordinate z ist, wobei z im Bereich von 0 am äußersten Ende des hinteren Endes bis $z_{Wmid}$ liegt, WO $W_{bottom}(z) = W_{mid}$ ist;
- $W_{mid}$ die Breite des Mittelabschnittes des Rumpfes ist;
- c ein Parameter ist, der im Bereich von 0,4-0,8 liegt;
- $z_{1/2W}$ die Längenkoordinate ist, wo die Breite des Kielteiles (1) des hinteren Endes (30) die Hälfte der Breite des Kielteiles (1) an Mittelabschnitt 20 ($W_{mid}$) ist;
- A eine Konstante ist, die im Bereich von -0,5 m bis +0,5 m liegt, wobei -0,5 m die untere Grenze von $W_{bottom}$ (z) definiert und wobei +0,5 m die obere Grenze von $W_{bottom}(z)$ definiert; und

wobei die vertikale Position des Kieles ($y_{bottom}$) eine Grundlinie definiert, wobei y = 0 ist.

2. Binnenschiff nach Anspruch 1, wobei die Breite des Kielteiles (1) des hinteren Endes (30) an einer Position zwischen z=$z_{1/2W}$-20 und z= $z_{1/2W}$-5 0 ist.

3. Binnenschiff nach irgendeinem der Ansprüche 1 und 2, wobei Parameter c im Bereich zwischen 0,42 und 0,7 liegt.

4. Binnenschiff nach irgendeinem der Ansprüche 1 bis 3, wobei A im Bereich zwischen -0,3 m und +0,3 m liegt.

5. Binnenschiff gemäß irgendeinem der vorangehenden Ansprüche, wobei die vertikale Position des ersten Hohlraumes als Funktion der Längenkoordinate z($y_{2a}(z)$) bei im Wesentlichen der halben Höhe des Rumpfes bei z=0 beginnt und allmählich auf im Wesentlichen ein Drittel der Höhe des Rumpfes bei z>$z_{1/2W}$ abnimmt, wonach $y_{2a}$ konstant bleibt.

6. Binnenschiff gemäß irgendeinem der vorangehenden Ansprüche, wobei der Rumpf eine Länge zwischen 30 m und 150 m aufweist.

7. Binnenschiff gemäß irgendeinem der vorangehenden Ansprüche, wobei der Rumpf eine Länge zwischen 60 m und 90 m aufweist.

8. Binnenschiff gemäß irgendeinem der vorangehenden Ansprüche, wobei der Rumpf eine Mittelabschnittsbreite ($W_{mid}$) zwischen 4 m und 12 m aufweist.

9. Binnenschiff gemäß irgendeinem der vorangehenden Ansprüche, wobei die relative Länge des hinteren Endes des Rumpfes im Verhältnis zur Gesamtlänge des Rumpfes ($L_{tail\,end}/L_{hull}$) zwischen 0, 1 und 0, 5 liegt.

10. Binnenschiff gemäß irgendeinem der vorangehenden Ansprüche, das einen Tiefgang zwischen 2,5 m und 4,5 m aufweist.

11. Binnenschiff gemäß irgendeinem der vorangehenden Ansprüche, das eine Ladekapazität zwischen 200 Tonnen und 3500 Tonnen aufweist.

**Revendications**

1. Bateau fluvial présentant une coque, dans lequel la coque comprend une extrémité avant (10), une section centrale (20), une extrémité arrière (30), une partie de fond (1), une première saillie (3A) et une seconde saillie (3B), sachant que l'extrémité arrière comprend une première cavité (2A) et une seconde cavité (2B), sachant que la partie de fond (1) présente une largeur W qui est fonction de la coordonnée de longueur de la coque (z), **caractérisé en ce que** les limites inférieure et supérieure de la plage dans laquelle la largeur de la partie de fond (1) de l'extrémité arrière (30) repose, sont décrites en fonction de z par la formule I :

$$W_{bottom}(z) = [W_{mid}/(1+\exp(-c*(z-z_{1/2W})))]+A \qquad \text{formule I}$$

dans laquelle

- $W_{bottom}(z)$ est la largeur de la partie de fond (1) en fonction d'une coordonnée de longueur z, z allant de 0 à l'extrémité infinie de l'extrémité arrière à $Z_{Wmid}$ où $W_{bottom}(z) = W_{mid}$ ;
- $W_{mid}$ est la largeur de section centrale de la coque ;
- c est un paramètre allant de 0,4 à 0,8 ;
- $z_{1/2W}$ est la coordonnée de longueur dans laquelle la largeur de la partie de fond (1) de l'extrémité arrière (30) fait la moitié de la largeur de la partie de fond (1) à la section centrale 20 ($W_{mid}$) ;
- A est une constante allant de- 0, 5m à + 0, 5 m, dans lequel- 0, 5m définit la limite inférieure de $W_{bottom}$ (z) et dans lequel + 0, 5 m définit la limite supérieure de $W_{bottom}$ (z) ; et

dans laquelle la position verticale du fond ($Y_{bottom}$) définit un produit de base dans lequel y = 0.

2. Bateau fluvial selon la revendication 1, dans lequel la largeur de la partie de fond (1) de l'extrémité arrière (30) est 0 à une position entre z = $z_{1/2W}$ - 20 et z = $z_{1/2W}$ - 5.

3. Bateau fluvial selon la revendication 1 ou 2, dans lequel le paramètre c est situé dans la plage entre 0,42 et 0,7.

4. Bateau fluvial selon l'une quelconque des revendications 1 à 3, dans lequel A est situé dans la plage entre -0,3 m et +0,3 m.

5. Bateau fluvial selon l'une quelconque des revendications précédentes, dans lequel la position verticale de la première cavité en fonction de la coordonnée de longueur z ($y_{2a}(z)$) commence à essentiellement la moitié de la hauteur de la coque à z=0 et décroît graduellement à essentiellement un tiers de la hauteur de la coque à z>$z_{1/2W}$, après quoi $y_{2a}$ reste constante.

6. Bateau fluvial selon l'une quelconque des revendications précédentes, dans lequel la coque présente une longueur entre 30 m et 150 m.

7. Bateau fluvial selon l'une quelconque des revendications précédentes, dans lequel la coque présente une longueur entre 60 m et 90 m.

8. Bateau fluvial selon l'une quelconque des revendications précédentes, dans lequel la coque présente une largeur de section centrale ($W_{mid}$) entre environ 4 m et 12 m.

9. Bateau fluvial selon l'une quelconque des revendications précédentes, dans lequel la longueur relative de l'extrémité arrière de la coque par rapport à la longueur totale de la coque ($L_{tail\ end}/L_{hull}$) est située entre 0, 1 et 0, 5.

10. Bateau fluvial selon l'une quelconque des revendications précédentes, présentant un tirant d'eau entre 2,5 m et 4,5 m.

11. Bateau fluvial selon l'une quelconque des revendications précédentes, présentant une capacité de cargo entre 200 tonnes et 3500 tonnes.

**FIG. 1**

EP 2 463 192 B1

FIG. 2

FIG. 3

FIG. 4

**REFERENCES CITED IN THE DESCRIPTION**

**Patent documents cited in the description**

- US 2009320731 A